# EUROPEAN PATENT SPECIFICATION

(11) **EP 3 100 100 B1**
(45) Date of publication and mention of the grant of the patent: **26.06.2019**
(21) Application number: 15743111.5
(22) Date of filing: 30.01.2015
(51) Int. Cl.: G02C 7/02, G02B 1/00, B29D 11/00, G02B 3/00

(54) **FABRICATING LENSES USING GRAVITY**
HERSTELLUNG VON LINSEN MITHILFE VON SCHWERKRAFT
FABRICATION DE LENTILLES GRÂCE À LA PESANTEUR

(30) Priority: 31.01.2014 AU 2014900293
(43) Date of publication of application: 07.12.2016
(73) Proprietor: The Australian National University, Acton, ACT 2600 (AU)
(72) Inventor: LEE, Woei Ming, Aranda, ACT 2614 (AU)
(74) Representative: Martin, Philip John
(86) International application number: PCT/AU2015/000041
(87) International publication number: WO 2015/113105

(56) References cited:
- EP-A1- 2 123 433
- KR-A- 20100 100 555
- US-A1- 2013 273 238
- F A CHOWDHURY ET AL.: 'Variable focus microscopy using a suspended water droplet.' J. OPT. vol. 1 4, 2012, page 055501, XP055216454
- W. M. LEE ET AL.: 'Fabricating low cost and high performance elastomer lenses using hanging droplets' BIOMED. OPT. EXPRESS, [Online] vol. 5, no. 5, 2014, pages 1626 - 1635, XP055216455 Retrieved from the Internet: <URL:http://www.opticsinfobase.org/boe/abst ract.cfm?URI=boe-5-5- 1626>

## Description

### Related Application

The present application claims the benefit of the earlier filing date of Australian Provisional Patent Application No. 2014900293 in the name of The Australian National University, filed on 31 January 2014.

### Technical Field

The present invention relates generally to the fabrication of lenses and, in particular, to moldless fabrication of a lens using gravitational force.

### Background

Existing methods for fabricating lenses (e.g., soft lithography, chemical processing, etc.) often involve multiple steps, e.g., high temperature injection molding into polymer, lapping for glass, etc. Such lens fabrication techniques potentially waste significant amounts of raw materials through excessive use of the raw materials, chemical reactions, etc. Existing techniques also rely on molds to shape the lens - causing defects in the fabricated lens due to imperfection in the molds and not allowing alteration of the lens shape during manufacturing. Such techniques only allow lenses of a certain focal length to be produced.

Thus, a need exists for a method of fabricating lenses that reduces or eliminates waste of raw materials and/or use of molds. US 2013/273238 A1 discloses a method of fabricating a lens using gravity. The method comprises forming a silicon support layer having a curved surface by means of stepwise deposit of liquid silicone on a slide by means of a dispensing needle. Subsequently the support substrate is inverted and the silicone cured.

### Summary

Disclosed is a lens fabrication technique which seeks to address the above problems. The lens fabrication technique uses a droplet of polydimethylsiloxane (PDMS) solution cured on a horizontal slide to form a PDMS support layer having a curved surface. A further PDMS droplet is then deposited on the curved surface of the PDMS support layer; the slide is then inverted to allow gravitational force to pull the uncured, further PDMS droplet down. The further, inverted PDMS droplet is then cured. Each repetition of depositing, slide-inverting, and curing of the further PDMS droplet adds an additional layer of PDMS, altering the shape and focal-length of the lens.

According to a first aspect of the present disclosure, there is provided a method of fabricating a lens using gravity, the method comprising: forming a polydimethylsiloxane support layer on a slide using a needle, the PDMS support layer having a curved surface; depositing further PDMS using the needle onto the curved surface of the PDMS support layer on the slide; inverting the slide; curing the deposited further PDMS on the inverted slide to form the lens; and altering the shape of the lens to reduce the focal length of the lens by repeatedly: depositing further PDMS using the needle onto the lens; inverting the slide, and curing the deposited further PDMS on the inverted slide.

Preferred embodiments are defined by the dependent claims.

### Brief Description of the Drawings

At least one embodiment of the present invention is described with reference to the drawings, in which:
Fig. 1 is a flow diagram illustrating a method of the gravity-assisted additive lens-fabrication in accordance with an embodiment of the invention;
Figs. 2A to 2F show block diagrams illustrating the method of Fig. 1;
Figs. 3A to 3D are block diagrams showing an experimental setup for testing four lenses fabricated using the method of Fig. 1 and the performance of those lenses; and
Figs. 4A to 4C are a block diagram and plots showing the collimation function of a lens fabricated using the method of Fig. 1.

### Detailed Description

Where reference is made in any one or more of the accompanying drawings to steps and/or features, which have the same reference numerals, those steps and/or features have for the purposes of this description the same function(s) or operation(s), unless the contrary intention appears.

Disclosed is an embodiment of the invention providing a moldless lens fabrication method combining layering and gravity, which efficiently utilizes raw material with little wastage. The disclosed lens fabrication method is also capable of controlling the shape of the lens during manufacturing to produce lenses of varying focal length.

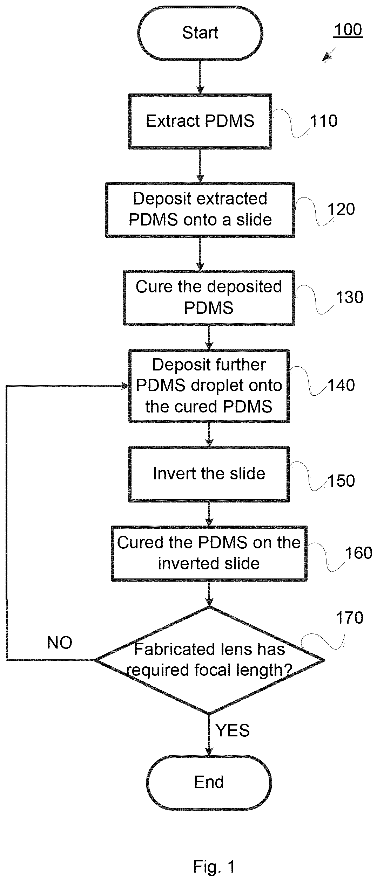

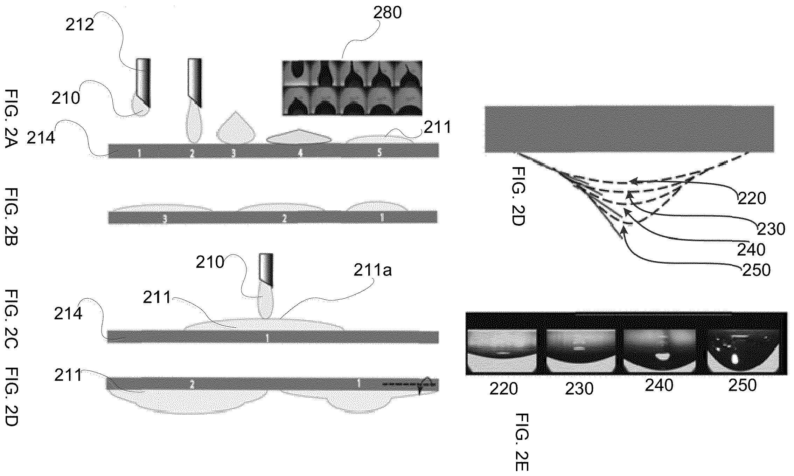

Fig. 1 shows a flow diagram for a method 100 for gravity-assisted additive lens fabrication, whilst Figs. 2A to 2F provide illustrations of each step of the method 100. The method 100 commences with steps 110 to 130 forming a polydimethylsiloxane (PDMS) support layer 211 on a slide 214 (shown in Fig. 2A). For example, the slide 214 may be a polished flat glass slide, such as a coverslip.

In step 110, a quantity of PDMS 210 is extracted. A needle 212 (shown in Fig. 2A) extracts a small quantity of the PDMS solution 210 (i.e., about 100 +/- 20 µl) by immersing the tip of the needle 212 into the PDMS solution 210. The tip of the needle 212 is typically fine (e.g., about 18 -21 gauge thickness) and is arranged perpendicular to the slide 214 before and after immersion into the PDMS solution.

PDMS solution 210 is highly viscous, allowing a finite quantity of PDMS solution 210 to easily adhere to the needle tip. In this method, the thickness of the needle tip determines the surface area with which the PDMS solution 210 comes in contact when the needle is immersed, which in turn determines the amount of PDMS solution 210 being extracted. Hence, the size of the needle tip determines the extracted amount of the PDMS solution 210.

The PDMS solution 210 is created by mixing a PDMS base with a curing agent in a typically 10:1 ratio, as measured by weight. The mixing of the PDMS solution 210 is typically performed by using a Q-tip or other mixing devices. The mixed PDMS solution 210 is allowed to rest, removing residue bubbles during stirring, before the needle 212 is immersed into the PDMS solution 210. Step 110 then proceeds to step 120.

In step 120, the extracted PDMS is deposited onto a slide. The needle 212 with the extracted PDMS solution 210 is held above the slide 214 to allow gravity to pull the PDMS solution 210 until a droplet of the PDMS solution 210 is deposited onto the slide 214. The slide 214 is arranged to be parallel relative to the ground during the depositing of the PDMS droplet 210 onto the slide 214, preventing the deposited PDMS droplet 210 from sliding on the slide 214. That is, the slide 214 is arranged substantially horizontal during the depositing process. The slide 214 is made of materials having a surface that is chemically inert and has low surface roughness, such as glass.

Fig. 2A shows illustrations of the PDMS solution 210 being deposited on the slide 214. Fig. 2A in 5 steps (1) - (5) shows the PDMS solution 210 dropping from the tip of the needle 212 and settling on the slide 214. Fig. 2B shows, in 3 steps (1) - (3), settling of the deposited PDMS droplet 211 on the horizontal slide 214. Image 280 of Fig. 2A shows photographic images of the PDMS droplet 210 being deposited on the slide 214 and settling on the slide 214. Step 120 proceeds to step 130.

In step 130, the deposited PDMS 211 is cured. The deposited PDMS 211 on the horizontal slide 214 is placed in an oven at a predetermined temperature for a period of time. For example, the oven is typically set at a temperature of 70°C for a period of 15 minutes to cure the PDMS 211. However, other appropriate temperatures and period of times can be used to cure the PDMS 211. The cured PDMS 211serves as a support layer for subsequent PDMS layers. Step 130 then proceeds to step 140.

In step 140, further PDMS 210 is deposited onto the cured PDMS. Further PDMS droplet 210 is deposited onto the curved surface 211a of the PDMS support layer 211 - shown in Fig. 2C. Step 140 then proceeds to step 150.

In step 150, the slide 214 is inverted. To prevent the further deposited PDMS droplet 210 from overflowing onto the slide 214, the slide 214 is quickly inverted (typically within two seconds) (as shown in Fig. 2D) after the further PDMS droplet 210 being deposited on the PDMS support layer 211. The deposit of further PDMS droplet 210 stays on the curved surface 211a, as the slide 214 is inverted, due to the interfacial force existing between the surfaces of the further PDMS droplet 210 and the curved surface 211a. At the same time, gravitational force is pulling the further PDMS droplet 210 toward the ground. The combination of these two forces causes the further PDMS droplet 210 to droop, and any excess further PDMS droplet 210 to drop off from the PDMS support layer 211 due to the gravitational force. Further, since the further PDMS droplet 210 experiences constant forces over the curved surface 211a, the fabricated lens exhibits an increased curvature (i.e., decreasing lens radius). Therefore, the amount of further PDMS droplet 210 that can be deposited on the PDMS support layer 211 depends on the curved surface area 211a; a curved surface 211a with larger curvature radius is capable of supporting more of the further PDMS droplet 210.

Fig. 2D also shows the drooping of the further PDMS solution 210 as the slide 214 is inverted. Step 150 then proceeds to step 160.

In step 160, the PDMS on the inverted slide 214 is cured. The inverted slide 214 is placed in an oven at a predetermined temperature for a predetermined period of time to cure the further PDMS droplet 210. As described in paragraph [0020] above, the oven can be set at a temperature of 70°C for a period of 15 minutes to cure the further PDMS solution 210. Step 160 proceeds to step 170.

In step 170, the fabricated lens is checked whether the lens has the required focal length. If not (NO), then step 170 proceeds to step 140 and the process of steps 140 to 160 is repeated to add a further layer to the lens. Otherwise (YES), the method 100 is completed.

By repeating the process of steps 140 to 160, further PDMS droplet 210 is deposited on the PDMS support layer 211. Each added layer increases the curvature, whilst reducing the focal length, of the fabricated lens. Figs. 2E and 2F show the deposit of one to four layers of further PDMS droplet 210 onto the PDMS support layer 211. Lens 220 is a lens with a single layer of further PDMS solution 210 being cured on the PDMS support layer 211, lens 230 has two layers of further PDMS solution 210 being cured on the PDMS support layer 211, lens 240 has three layers of further PDMS solution 210 being cured on the PDMS support layer 211, and lens 250 has four layers of further PDMS solution 210 being cured on the PDMS support layer 211. The refractive indices of the PDMS support layer 211 and the further PDMS droplet 210 are matched, resulting in the fabricated lens having no abrupt changes in refractive index along the central axis of the fabricated lens - especially between the PDMS support layer 211 and the further PDMS droplet 210, or between each further PDMS droplet 210. Abrupt changes in refractive index along the centre axis of the fabricated lens can invoke large spherical aberrations, in addition to other aberrations (e.g, defocusing), which reduces the imaging quality of the fabricated lens.

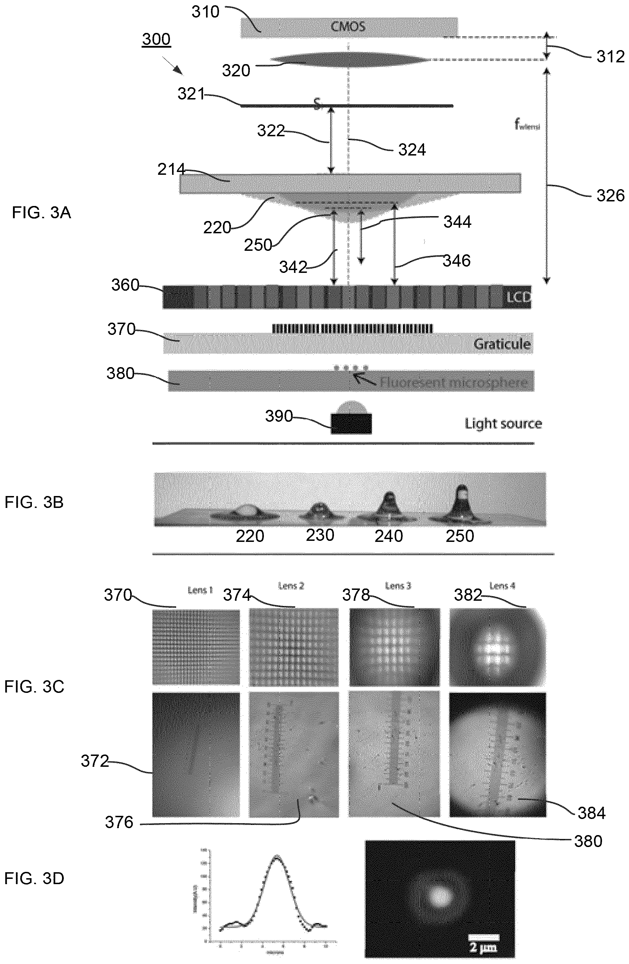

Fig. 3A shows the experimental setup of a light transmission imaging system 300 for testing the imaging quality of lenses fabricated using the method 100 (e.g., lenses 220, 230, 240, and 250). The imaging system 300 comprises a complementary metal-oxide-semiconductor (CMOS) imaging sensor 310, an imaging lens 320, the slide 214 with a fabricated lens (e.g., lens 220, 230, 240, or 250), and an image generator (i.e., a liquid crystal display (LCD) 360; or a brightfield light source 390 and a non-transparent micrometre graticule 370; or a fluorescence light source 390 and fluorescent microsphere 380). The different setup for the image generator allows performance of the fabricated lens (i.e., lens 220, 230, 240, and 250) to be assessed over different imaging modalities (e.g., brightfield, fluorescence). Lenses 220 and 250 with corresponding focal length fwlens2 344 and fwlens1 346, respectively, are shown in Fig. 3A only as an example and validation of the enhanced imaging performance using the method disclosed herein.

The CMOS imaging sensor 310 has a resolution of 3.1 Megapixel, but other resolution are also viable for this experiment. The imaging sensor 310 and the lens 320 are separated by a distance 312, and in this experimental setup, the imaging sensor 310 and the lens 320 are in-built in a camera. A distance fwlensi 326 separates the image generator and the imaging lens 320.

The slide 214 with the fabricated lens (e.g., lens 220, 230, 240, or 250) is positioned in between the lens 320 and the image generator. The peak of the fabricated lens (i.e., lens 220, 230, 240, or 250) is positioned at a distance, Sₒ 342, away from the image generator, resulting in an intermediate imaging plane 321 located at a distance Sᵢ 322 away from the slide 214. Thus, the imaging sensor 310 captures the generated image, after that image passes through the fabricated lens (i.e., lens 220, 230, 240, or 250), the slide 214, and the lens 320.

The imaging sensor 310, the lens 320, the slide 214, and the fabricated lens (i.e., lens 220, 230, 240, or 250) are horizontally arranged along a principle optical axis 324, so that the generated image does not fall on the sensor 310 at an oblique angle.

Fig. 3B shows the fours lenses 220, 230, 240, and 250 fabricated using the method 100. The images 371, 374, 378, and 382 of Fig. 3C show the images processed by the imaging sensor 310 from images generated by the LCD 360 passing through lenses 220, 230, 240, and 250, respectively. Images 372, 376, 379, and 384 of Fig. 3C show the image processed by the imaging sensor 310 from images generated by the brightfield light source 390 and the non-transparent micrometre graticule 370 passing through lenses 220, 230, 240, and 250, respectively. The parallel gridlines of the non-transparent micrometer graticule 370 used in this example are separated by a distance of 10 µm from each other. Lastly, the images of Fig. 3D are images processed by the imaging sensor 310 after the image generated by the fluorescence light source 390 passes through a fluorescent microsphere 380 and the fabricated lens 240.

Each captured RGB (Red, Green, or Blue) pixel, shown in images 371, 374, 378, and 382, generated by the LCD 360 is approximately 100 µm wide. As seen in the images 371, 374, 378, and 382, lens 250 has the highest magnification compared to the other lenses 220, 230, and 240 based on the magnified LCD pixels resolved by the imaging sensor 310. As expected under the thin lens approximation, decreasing radius of curvature of the fabricated lens (i.e., lens 220 to 250) leads to a proportional decrease in focal length, resulting in increasing magnification and resolving power of the lenses (i.e., increasing numerical aperture). Hence, a highly curved PDMS lens has higher optical magnification and imaging resolution.

Images 372, 376, 379, and 384 show microscope calibration slides with the non-transparent micrometre graticule 370 of 10 µm per division being magnified and processed by the imaging sensor 310. Similar to the images 371, 374, 378, and 382, these images show lens 250 having the highest magnification and greatest resolving power compared to the other lenses 220, 230, and 240 based on the magnified image of the non-transparent micrometer graticule 370 processed by the imaging sensor 310.

In another experiment, a 1 µm fluorescent microsphere is used as a point spread function (PSF) to measure image resolution provided by the lens 240. Fig. 3D shows a cross-section light intensity plot and a two-dimensional light intensity image processed by the imaging sensor 310. The cross-section light intensity plot and the two-dimensional light intensity image is from the image of a 1 µm fluorescent microsphere being illuminated by a fluorescence light source 390, after passing through the fabricated lens 240, falling on the imaging sensor 310. As seen from the images of Fig. 3D, the lens 240 is capable of resolving an image with a full-width-half-maximum (FWHM) of 2.5 µm, based on the curve fit value and the PSF being defined by FWHM of an Airy disc.

The advantages of the lens-fabrication method 100 are the simplicity and reproducibility of the manufacturing method. The lens-fabrication method 100 also minimises lens defect that typically exists in existing lens-fabrication methods due to asymmetry or deformation of the molds used. Furthermore, a lens fabricated using the method 100 can be shaped - by adding PDMS layers - to achieve a focal length of between 10 mm to 5 mm (i.e., lens 220 to 250, respectively) resulting in significantly different optical magnifications. Lenses of differing magnification can be used for different purposes, e.g. imaging and collimation.

Lenses 220 and 230 shown in Fig. 3C are particularly useful for imaging applications, whilst lenses 240 and 250 are useful for light collimation applications. Typically, lenses fabricated with three or more layers of the further PDMS solution 210 deposited on the PDMS support layer 211 result in a lens more suitable for collimation as such lenses have shorter focal length.

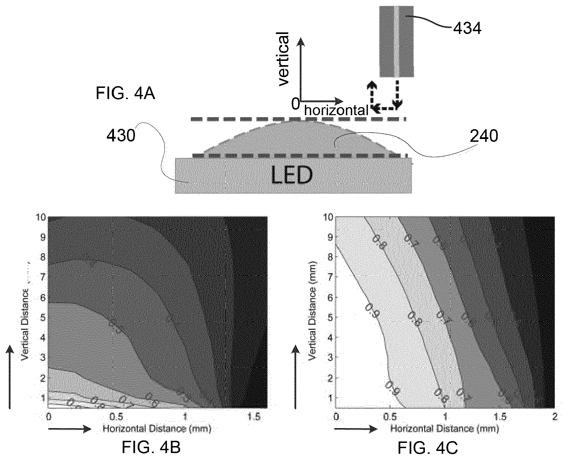

Fig. 4A illustrates the confocal light measurement setup to determine that the lens 240 is capable of collimating/redirecting light emitted from a single light emitted diode (LED) 430. An optical fibre 434 connected to a photo-detector (not shown) is used to measure two-dimensional light intensity distribution being emitted by the LED 430 with and without the lens 240 to generate the images shown in Figs. 4B and 4C, respectively. Fig. 4B shows the light (produced by the LED 430 without the lens 240 attached) varying in intensity along the vertical axis. Conversely, Fig. 4C shows the light produced by the LED 430, after passing through the lens 240, having an almost uniform illumination along the vertical axis.

### Industrial Applicability

The arrangements described are applicable to the lens manufacturing industries.

The foregoing describes only some embodiments of the present invention, and modifications and/or changes can be made thereto without departing from the scope of the invention, the embodiments being illustrative and not restrictive.

In the context of this specification, the word "comprising" means "including principally but not necessarily solely" or "having" or "including", and not "consisting only of". Variations of the word "comprising", such as "comprise" and "comprises" have correspondingly varied meanings.

## Claims

1. A method (100) of fabricating a lens using gravity, the method comprising:
forming (110, 120, 130) a polydimethylsiloxane (PDMS) support layer (211) on a slide (214) using a needle (212), the PDMS support layer having a curved surface;
depositing (140) further PDMS using the needle onto the curved surface of the PDMS support layer on the slide;
inverting (150) the slide;
curing (160) the deposited further PDMS on the inverted slide to form the lens; and
altering the shape of the lens to reduce the focal length of the lens by repeatedly:
depositing further PDMS using the needle onto the lens,
inverting the slide, and
curing the deposited further PDMS on the inverted slide.

2. The method as claimed in claim 1, wherein the forming of the PDMS support layer comprises the steps of:
extracting (110) PDMS by immersing the tip of the needle into PDMS solution;
depositing (120) the extracted PDMS on the needle onto the slide; and
curing (130) the deposited extracted PDMS on the slide.

3. The method as claimed in claim 2, wherein the quantity of the PDMS deposited on the slide determines the size of the PDMS support layer thereby determining the size of the fabricated lens.

4. The method as claimed in any one of claims 2 to 3, wherein the tip of the needle is in a vertical position in relation to the ground when being immersed into the PDMS.

5. The method as claimed in any one of the preceding claims, wherein the further PDMS is deposited onto the slide by holding the needle above the slide and allowing gravity to pull the PDMS on the needle until a drop of the PDMS is deposited onto the slide.

6. The method as claimed in any one of the preceding claims, wherein the slide is held horizontally relative to the ground during the depositing of the PDMS onto the slide or when the slide is inverted.

7. The method as claimed in any one of the preceding claims, wherein the PDMS is cured by placing the slide in an oven for a period of time at a predetermined temperature.

8. The method as claimed in claim 7, wherein the period of time is 15 minutes and the predetermined temperature is 70°C.

9. The method as claimed in any one of the preceding claims, wherein the inverting of the slide occurs such that the surface of the slide with the deposited PDMS is facing the ground.

10. The method as claimed in any one of the preceding claims, wherein the inverting of the slide occurs within 2 seconds of the PDMS being deposited onto the PDMS support layer.

11. The method as claimed in any one of the preceding claims, wherein the lens fabricated is a short-focal-length lens.

12. The method as claimed in any one of the preceding claims, wherein the slide is a glass slide.

13. The method as claimed in any one of the preceding claims, wherein the fabricated lens is adapted for use in optical amplification of an object or optical collimation of light produced by a light source.

14. The method as claimed in any one of the preceding claims, wherein the tip of the needle is of a size between 18 to 21 gauge.

15. The method as claimed in claim 14, wherein the quantity of PDMS solution extracted by the needle is between 80 to 120 µl.

## Patentansprüche

1. Verfahren (100) zur Herstellung einer Linse unter Verwendung von Schwerkraft, wobei das Verfahren Folgendes beinhaltet:
Bilden (110, 120, 130) einer Trägerschicht (211) aus Polydimethylsiloxan (PDMS) auf einem Objektträger (214) unter Verwendung einer Nadel (212), wobei die PDMS-Trägerschicht eine gekrümmte Oberfläche besitzt;
Ablagern (140) von zusätzlichem PDMS unter Verwendung der Nadel auf der gekrümmten Oberfläche der PDMS-Trägerschicht auf dem Objektträger;
Umkehren (150) des Objektträgers;
Härten (160) des abgelagerten zusätzlichen PDMS auf dem umgekehrten Objektträger zum Bilden der Linse; und
Verändern der Form der Linse zum Reduzieren der Brennweite der Linse durch wiederholtes Durchführen folgender Schritte:
Ablagern von zusätzlichem PDMS unter Verwendung der Nadel auf der Linse,
Umkehren des Objektträgers, und
Härten des abgelagerten zusätzlichen PDMS auf dem umgekehrten Objektträger.

2. Verfahren nach Anspruch 1, bei welchem das Bilden der PDMS-Trägerschicht folgende Schritte beinhaltet:
Extrahieren (110) von PDMS durch Tauchen der Nadelspitze in PDMS-Lösung;
Ablagern (120) des extrahierten PDMS auf der Nadel auf dem Objektträger; und
Härten (130) des abgelagerten extrahierten PDMS auf dem Objektträger.

3. Verfahren nach Anspruch 2, bei welchem die Menge an auf dem Objektträger abgelagertem PDMS die Größe der PDMS-Trägerschicht bestimmt, wodurch die Größe der hergestellten Linse bestimmt wird.

4. Verfahren nach einem der Ansprüche 2 bis 3, bei welchem die Spitze der Nadel in einer vertikalen Position in Bezug auf den Boden ist, wenn sie in das PDMS getaucht wird.

5. Verfahren nach einem der vorhergehenden Ansprüche, bei welchem das zusätzliche PDMS auf dem Objektträger abgelagert wird, indem die Nadel über den Objektträger gehalten wird und Schwerkraft in die Lage versetzt wird, das PDMS an der Nadel anzuziehen, bis ein Tropfen PDMS auf dem Objektträger abgelagert wird.

6. Verfahren nach einem der vorhergehenden Ansprüche, bei welchem der Objektträger im Zuge des Ablagerns des PDMS auf dem Objektträger, oder wenn der Objektträger umgekehrt ist, horizontal in Bezug auf den Boden gehalten wird.

7. Verfahren nach einem der vorhergehenden Ansprüche, bei welchem das PDMS gehärtet wird, indem der Objektträger über einen Zeitraum bei einer vorbestimmten Temperatur in einem Ofen platziert wird.

8. Verfahren nach Anspruch 7, bei welchem der Zeitraum 15 Minuten beträgt und die vorbestimmte Temperatur 70°C beträgt.

9. Verfahren nach einem der vorhergehenden Ansprüche, bei welchem das Umkehren des Objektträgers so eintritt, dass die Oberfläche des Objektträgers mit dem abgelagerten PDMS dem Boden zugewandt ist.

10. Verfahren nach einem der vorhergehenden Ansprüche, bei welchem das Umkehren des Objektträgers innerhalb von 2 Sekunden eintritt, nachdem das PDMS auf der PDMS-Trägerschicht abgelagert wurde.

11. Verfahren nach einem der vorhergehenden Ansprüche, bei welchem die hergestellte Linse eine Linse mit kurzer Brennweite ist.

12. Verfahren nach einem der vorhergehenden Ansprüche, bei welchem der Objektträger ein Glasobjektträger ist.

13. Verfahren nach einem der vorhergehenden Ansprüche, bei welchem die hergestellte Linse für den Gebrauch in optischer Verstärkung eines Objekts oder in optischer Kollimation von Licht geeignet ist, welches durch eine Lichtquelle erzeugt wird.

14. Verfahren nach einem der vorhergehenden Ansprüche, bei welchem die Spitze der Nadel eine Größe zwischen 18 und 21 Gauge beträgt.

15. Verfahren nach Anspruch 14, bei welchem die Menge an durch die Nadel extrahierter PDMS-Lösung zwischen 80 und 120 µl beträgt.

## Revendications

1. Procédé (100) de fabrication d'une lentille en utilisant la gravité, le procédé comprenant :
la formation (110, 120, 130) d'une couche de support (211) en polydiméthylsiloxane (PDMS) sur une lame (214) en utilisant une aiguille (212), la couche de support en PDMS présentant une surface incurvée ;
la déposition (140) d'un PDMS ultérieur en utilisant l'aiguille sur la surface incurvée de la couche de support de PDMS sur la lame ;
l'inversion (150) de la lame ;
le durcissement (160) du PDMS ultérieur déposé sur la lame inversée permettant de former la lentille ; et
la modification de la forme de la lentille permettant de réduire la longueur focale de la lentille en effectuant de manière répétée :
la déposition du PDMS ultérieur en utilisant l'aiguille sur la lentille,
l'inversion de la lame, et
le durcissement du PDMS ultérieur déposé sur la lame inversée.

2. Procédé selon la revendication 1, dans lequel la formation de la couche de support de PDMS comprend les étapes consistant à :
extraire (110) le PDMS en immergeant la pointe de l'aiguille dans la solution de PDMS ;
déposer (120) le PDMS extrait sur l'aiguille sur la lame ; et
durcir (130) le PDMS extrait déposé sur la lame.

3. Procédé selon la revendication 2, dans lequel la quantité de PDMS déposée sur la lame détermine la taille de la couche de support PDMS en déterminant ainsi la taille de la lentille fabriquée.

4. Procédé selon l'une quelconque des revendications 2 à 3, dans lequel la pointe de l'aiguille est dans une position verticale par rapport au sol lorsqu'elle est immergée dans le PDMS.

5. Procédé selon l'une quelconque des revendications précédentes, dans lequel le PDMS ultérieur est déposé sur la lame en maintenant l'aiguille au-dessus de la lame et en permettant à la gravité de tirer le PDMS sur l'aiguille jusqu'à ce qu'une goutte de PDMS soit déposée sur la lame.

6. Procédé selon l'une quelconque des revendications précédentes, dans lequel la lame est maintenue horizontalement par rapport au sol pendant la déposition du PDMS sur la lame ou lorsque la lame est inversée.

7. Procédé selon l'une quelconque des revendications précédentes, dans lequel le PDMS est durci en plaçant la lame dans un four pendant un laps de temps, à une température prédéterminée.

8. Procédé selon la revendication 7, dans lequel le laps de temps est de 15 minutes et la température prédéterminée est de 70°C.

9. Procédé selon l'une quelconque des revendications précédentes, dans lequel l'inversion de la lame survient de sorte que la surface de la lame avec le PDMS déposé soit face au sol.

10. Procédé selon l'une quelconque des revendications précédentes, dans lequel l'inversion de la lame a lieu dans un délai de 2 secondes suivant la déposition du PDMS sur la couche de support de PDMS.

11. Procédé selon l'une quelconque des revendications précédentes, dans lequel la lentille fabriquée est une lentille à longueur focale courte.

12. Procédé selon l'une quelconque des revendications précédentes, dans lequel la lame est une lame en verre.

13. Procédé selon l'une quelconque des revendications précédentes, dans lequel la lentille fabriquée est conçue pour une utilisation dans une amplification optique d'un objet ou une collimation optique de lumière produite par une source lumineuse.

14. Procédé selon l'une quelconque des revendications précédentes, dans lequel la pointe de l'aiguille est d'une taille comprise entre 18 et 21 gauges.

15. Procédé selon la revendication 14, dans lequel la quantité de solution PDMS extraite par l'aiguille est comprise entre 80 et 120 µl.
